(19) Europäisches Patentamt
European Patent Office
Office européen des brevets

(11) Publication number: 0 491 191 A1

(12) # EUROPEAN PATENT APPLICATION

(21) Application number: 91120142.4

(22) Date of filing: 26.11.91

(51) Int. Cl.5: C08L 71/12, //(C08L71/12, 79:08,83:06,23:00)

(30) Priority: 19.12.90 US 629960

(43) Date of publication of application: 24.06.92 Bulletin 92/26

(84) Designated Contracting States: DE ES FR GB IT NL

(71) Applicant: GENERAL ELECTRIC COMPANY
1 River Road
Schenectady New York 12305(US)

(72) Inventor: Haaf, William Robert
19 Scotch Pine Drive
Voorheesville, New York 12186(US)

(74) Representative: Catherine, Alain
General Electric France Service de Propriété Industrielle 18 Rue Horace Vernet
F-92136 Issy-Les-Moulineaux Cedex(FR)

(54) **Blends of polyphenylene ether resin mixtures and a polyetherimide siloxane copolymer.**

(57) Blend compositions comprise a mixture of at least two polyphenylene ether resins and a polyetherimide siloxane copolymer. The mixture of at least two polyphenylene ether resins includes a first polyphenylene ether resin having an intrinsic viscosity at 25°C in chloroform of not less than about 0.40 dl/g and a second polyphenylene ether resin having an intrinsic viscosity at 25°C in chloroform of not greater than about 0.30 dl/g.

EP 0 491 191 A1

## FIELD OF THE INVENTION

The present invention relates to blend compositions comprising polyphenylene ether resins and a polyetherimide siloxane copolymer, which compositions exhibit an advantageous combination of properties including flame retardancy and good processability as indicated by melt viscosity.

## BACKGROUND OF THE INVENTION

Polyphenylene ether resins are well known in the art and exhibit a desirable combination of chemical, physical and electrical properties over a wide temperature range. This combination of properties renders polyphenylene ether resins suitable for use in a broad range of applications. Often times, polyphenylene ether resins are blended with other resins in order to improve their chemical resistance, their processability and/or other properties and to increase their fields of application.

For example, the White et al U. S. Patent No. 4,431,779 discloses blend compositions comprising a polyphenylene ether and a polyetherimide. The blends are disclosed as disclosing good impact strength as well as good mechanical properties. The Holub et al U. S. Patent No. 4,873,287 discloses blend compositions comprising a polyphenylene ether, a polyetherimide and a block copolymer of a vinyl aromatic compound and an alkene compound. The blends are disclosed as exhibiting high glass transition temperatures and excellent flexural properties.

Often times, phosphorus and/or halogen containing materials are added to polyphenylene ether resins in order to improve the fire retardant properties of the resins. However, the use of such phosphorus and/or halogen containing materials can be disadvantageous for several reasons. For example, halogen-containing materials can sometimes react during resin processing to form corrosive by-products. The copending Rock application Serial No. 07/563,750 filed August 3, 1990 discloses blend compositions comprising a polyphenylene ether and a polyetherimide siloxane copolymer. The compositions are disclosed as exhibiting low flammability, and are advantageous in that they do not require phosphorus and/or halogen containing materials. Flame retardant silicone-polyimides are also disclosed in the Cella et al U. S. Patents Nos. 4,690,997 and 4,808,686.

Owing to the increasing demand for use of polyphenylene ether resin compositions in various applications, there is a continuing need to provide such compositions having improved combinations of properties.

## SUMMARY OF THE INVENTION

Accordingly, it is an object of the present invention to provide improved polyphenylene ether resin compositions. It is a further object of the invention to provide polyphenylene ether resin compositions which exhibit good flame retardant properties. It is another object of the invention to provide polyphenylene ether resin compositions which exhibit good flame retardant properties and good processability, particularly as indicated by melt viscosity.

These and additional objects are provided by the blend compositions according to the present invention which comprise a mixture of at least two polyphenylene ether resins, and a polyetherimide siloxane copolymer. More particularly, the mixture of at least two polyphenylene ether resins included in the blend compositions of the present invention comprise a first polyphenylene ether resin having an intrinsic viscosity of 25°C in chloroform of not less than about 0.40 dl/g and a second polyphenylene ether resin having an intrinsic viscosity at 25°C in chloroform of not greater than about 0.30 dl/g. The present Inventor has discovered that the melt flowability, and therefore the processability, of the blend compositions according to the present invention containing the mixture of at least two polyphenylene ether resins is significantly improved while the flame retardant properties provided by the polyetherimide siloxane copolymer are retained. The blend compositions according to the present invention may further include a rubber component, if desired, for improving the impact properties of the compositions.

These and additional objects and advantages provided by the compositions of the present invention will be more fully apparent in view of the following detailed description.

## DETAILED DESCRIPTION

The blend compositions according to the present invention comprise a mixture of at least two polyphenylene ether resins. The first polyphenylene ether resin has an intrinsic viscosity at 25°C in chloroform of not less than about 0.40 dl/g, while the second polyphenylene ether resin has an intrinsic

viscosity at 25°C in chloroform of not greater than about 0.30 dl/g. It has been discovered that a mixture of at least these two polyphenylene ether resins provides the blend compositions of the present invention with good processability, particularly as indicated by a lowered melt viscosity, while retaining the flame retardant properties provided by the polyetherimide siloxane copolymer also included in the compositions.

More particularly, it is preferred that the second polyphenylene ether resin included in the mixture and having an intrinsic viscosity of not greater than 0.30 dl/g is included in the mixture in an amount sufficient to lower the overall melt viscosity of the blend compositions. More preferably, the mixture of polyphenylene ether resins includes from about 5 to about 95 weight percent of the first polyphenylene ether resin having an intrinsic viscosity of not less than about 0.40 dl/g and from about 95 to about 5 weight percent of the second polyphenylene ether resin having an intrinsic viscosity of not greater than about 0.30 dl/g, based on the mixture of the first and second polyphenylene ether resins.

Polyphenylene ether resins are well known in the art and are generally of the formula

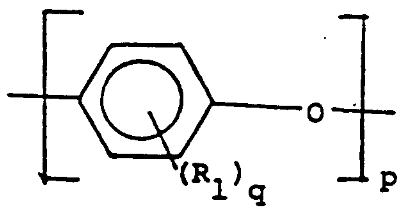

wherein each $R_1$ is individually selected from the group consisting of halogen, alkyl, aryl and alkoxy groups, q is from 0 to 4 and p is at least 20. The first polyphenylene ether resin included in the mixture of the present invention and having an intrinsic viscosity of greater than about 0.40 dl/g has a relatively high number of the above-noted repeating units, while the second polyphenylene ether resin included in the present mixture and having an intrinsic viscosity of not greater than about 0.30 dl/g has a relatively low number of the above-noted repeating units. When $R_1$ comprises an alkyl group, an aryl group or an alkoxy group, the group suitably contains from 1 to about 12 carbon atoms.

The polyphenylene ether polymers suitable for use in the present invention are well known in the art and may be prepared by any of a number of processes known in the art from corresponding phenols or reactive derivatives thereof. Examples of polyphenylene ether resins and methods for their production are set forth in the Hay U. S. Patents Nos. 3,306,874 and 3,306,875, in the Stamatoff U. S. Patents Nos. 3,257,357 and 3,257,358, and in U. S. Patent No. 4,935,472 of S. B. Brown et al, all of which are incorporated herein by reference. Throughout the specification and claims the term "polyphenylene ether resin" includes unsubstituted polyphenylene ether polymers, substituted polyphenylene ether polymers, polyphenylene ether copolymers and blends thereof.

Preferred polyphenylene ether polymers adapted for use in the present invention include, but are not limited to, poly(2,6-dimethyl-1,4-phenylene)ether; poly(2,3,6-trimethyl-1,4-phenylene) ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; poly-(3-bromo-2,6-dimethyl-1,4-phenylene)ether, copolymers thereof and mixtures thereof, and the like. Particularly preferred polyphenylene ether polymers for use in the compositions of the present invention include poly(2,6-dimethyl-1,4-phenylene) ether, poly(2,3,6-trimethyl-1,4-phenylene)ether, blends of these polymers and copolymers including units of 2,3,6-trimethyl-1,4-phenylene ether and units of 2,6-dimethyl-1,4-phenylene ether. Examples of such polymers and copolymers are also set forth in U. S. Patent No. 4,806,297.

The blend compositions according to the present invention further contain a polyetherimide siloxane copolymer. Preferably, the polyetherimide siloxane copolymer is included in the blend compositions in an amount sufficient to improve the flame retardant properties of the blend compositions. In a preferred embodiment, the blend compositions of the invention comprise from about 50 to about 99 weight percent, and more preferably from about 75 to about 99 weight percent, of the mixture of at least two polyphenylene ether resins and from about 1 to about 50 weight percent, and more preferably from about 1 to about 25 weight percent, of the polyetherimide siloxane copolymer, based on the mixture of the at least two

polyphenylene ether resins and the polyetherimide siloxane copolymer. In a further preferred embodiment, the blend compositions of the invention comprise from about 95 to about 99 weight percent of the mixture of at least two polyphenylene ether resins and from about 1 to about 5 weight percent of the polyetherimide siloxane copolymer, based on the mixture of at least two polyphenylene ether resins and the polyetherimide siloxane copolymer combined.

The polyetherimide siloxane copolymer which is included in the blend compositions of the present invention preferably contains repeating units of the formula

(I) 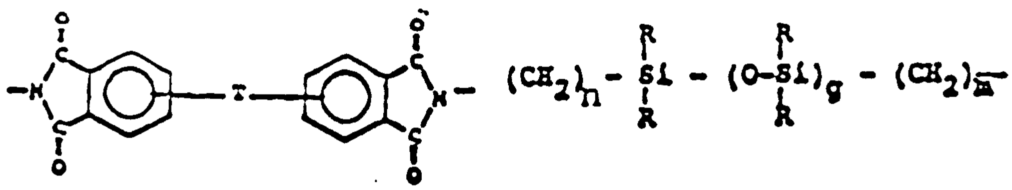

and of the formula

(II) 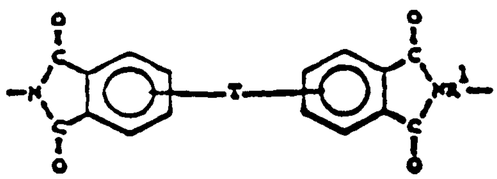

wherein T is -0- or a group of the formula -0-Z-0- wherein the divalent bonds of the -0- or the -0-Z-0- group are in the 3,3', 3,4', 4,3', or the 4,4' positions; Z is a divalent radical selected from the group consisting of

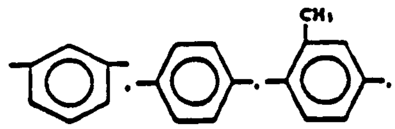

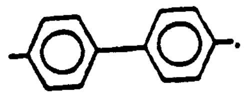

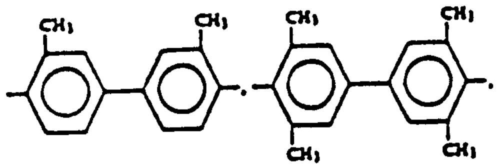

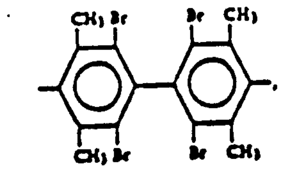

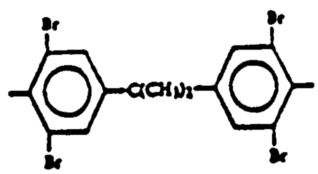

and

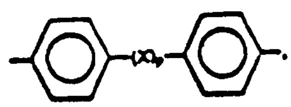

wherein X is a member selected from the group consisting of divalent radicals of the formulas

$-C_yH_{2y}-$, 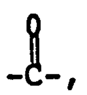, 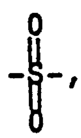, -O- and -S-

where y is an integer from 1 to about 5, and p is 0 or 1; n and m independently are integers from 1 to about 10; g is an integer from 1 to about 40; R is a $C_1$-$C_{14}$ monovalent hydrocarbon radical or a substituted $C_1$-$C_{14}$ monovalent hydrocarbon radical; and $R^1$ is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula

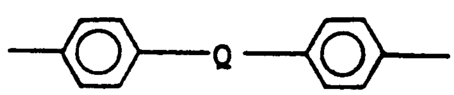

where Q is a member selected from the group consisting of

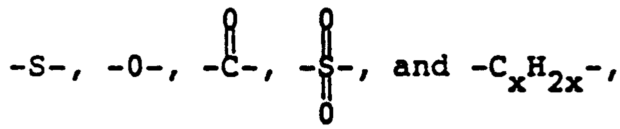

and x is an integer from 1 to about 5. In a preferred embodiment of formula (I), each R is a methyl group, and n and m are each three. Suitable polyetherimide-siloxane copolymers and their methods of preparation are disclosed in the Cella et al U. S. Patents Nos. 4,690,997 and 4,808,686 and the copending Rock application Serial No. 07/563,750 filed August 3, 1990, the disclosures of which are incorporated herein by reference.

The polyetherimide-siloxane copolymers included in the blend compositions of the present invention can be prepared by methods well known in the art, for example, by the reaction of an aromatic bis(ether anhydride) of the formula

(III) 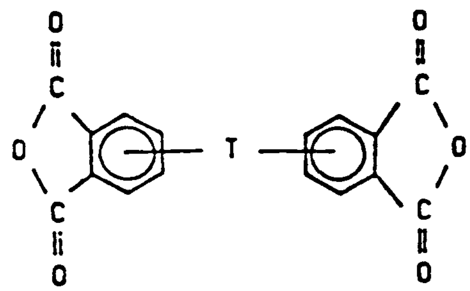

with at least one organic diamine of the formula

(IV) $H_2N-R^1-NH_2$

and at least one amine-terminated organosiloxane of the formula

(V) 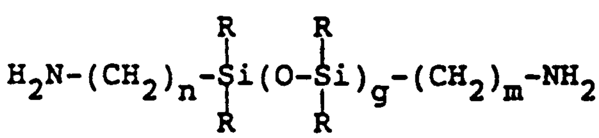

wherein n, m, g, T, R and $R^1$ are defined as described above.

In preparing the polyetherimide-siloxane copolymers included in the blend compositions of the present invention from an aromatic bis(ether anhydride), at least one organic diamine and at least one amine-terminated organosiloxane as described above, suitable bis(ether anhydride)s include, but are not limited to, the following:

1,3-bis(2,3-dicarboxyphenoxy)benzene dianhydride;
1,4-bis(2,3-dicarboxyphenoxy)benzene dianhydride;
1,3-bis(3,4-dicarboxyphenoxy)benzene dianhydride;
1,4-bis(3,4-dicarboxyphenoxy)benzene dianhydride;
4,4'-bis(phthalic anhydride)ether;
2,2-bis[4-(3,4-dicarboxyphenoxy)phenyl]propane dianhydride;
4,4'-bis(3,4-dicarboxyphenoxy)dipenyl ether dianhydride;
4,4'-bis(3,4-dicarboxyphenoxy)diphenyl sulfide dianhydride;
4,4'-bis(3,4-dicarboxyphenoxy)benzophenone dianhydride;
4,4'-bis(3,4-dicarboxyphenoxy)diphenyl sulfone dianhydride;
2,2-bis([4-2,3-dicarboxyphenoxy)phenyl]propane dianhydride;
4,4'-bis(2,3-dicarboxyphenoxy)diphenyl ether dianhydride;
4,4'-bis(2,3-dicarboxyphenoxy)diphenyl sulfide dianhydride;
4,4'-bis(2,3-dicarboxyphenoxy)benzophenone dianhydride;
4,4'-bis(2,3-dicarboxyphenoxy)diphenyl sulfone dianhydride;

4-(2,3-dicarboxyphenoxy)-4'-(3,4-dicarboxyphenoxy) diphenyl-2,2-propane dianhydride;
4-(2,3-dicarboxyphenoxy)-4'-(3,4-dicarboxyphenoxy) diphenyl ether dianhydride;
4-(2,3-dicarboxyphenoxy)-4'-(3,4-dicarboxyphenoxy) diphenyl sulfide dianhydride;
4-(2,3-dicarboxyphenoxy)-4'-(3,4-dicarboxyphenoxy) benzophenone dianhydride;
4-(2,3-dicarboxyphenoxy)-4'-(3,4-dicarboxyphenoxy) diphenyl sulfone dianhydride; and mixtures thereof.

Some of these aromatic bis(ether anhydride)s are disclosed in the Heath et al U. S. Patent No. 3,972,902. As described therein, the bis(ether anhydride)s can be prepared by the hydrolysis, followed by dehydration, of the reaction product of a nitro-substituted phenyl dinitrile with a metal salt of dihydric phenol compound in the presence of a dipolar, aprotic solvent. Additional aromatic bis(ether anhydride)s also suitable for preparing the polyetherimide siloxane copolymer are disclosed by Koton et al. (Institute of Heteroorganic Compounds, Academy of Sciences, U.S.S.R.), U.S.S.R. Patent No. 257,010 dated November 11, 1969, and by Koton et al, Zh. Org. Khin. 4(5), 774 (1968).

Organic diamines suitable for use in preparing the polyetherimide siloxane copolymer include, but are not limited to, the following:

m-phenylenediamine;
p-phenylenediamine;
4,4'-diaminodiphenylpropane;
4,4'-diaminodiphenylmethane (commonly named 4,4'-methylenedianiline);
4,4'-diaminodiphenyl sulfide;
4,4'-diaminodiphenyl sulfone;
4,4'-diaminodiphenyl ether (commonly named 4,4'-oxydianiline);
1,5-diaminonaphthalene;
3,3-dimethylbenzidine;
3,3-dimethoxybenzidine;
2,4-bis(beta-amino-t-butyl)toluene;
bis(p-beta-amino-t-butylphenyl)ether;
bis(p-beta-methyl-o-aminophenyl)benzene;
1,3-diamino-4-isopropylbenzene;
1,2-bis(3-aminopropoxy)ethane;
benzidine;
m-xylylenediamine;
2,4-diaminotoluene;
2,6-diaminotoluene;
bis(4-aminocyclohexyl)methane;
3-methylheptamethylenediamine;
4,4-dimethylheptamethylenediamine;
2,11-dodecanediamine;
2,2-dimethylpropoylenediamine;
octamethylenediamine;
3-methoxyhexamethylenediamine;
2,5-dimethylhexamethylenediamine;
2,5-dimethylheptamethylenediamine;
3-methylheptamethylenediamine;
5-methylnonamethylenediamine;
1,4-cyclohexanediamine;
1,12-octadecanediamine;
bis(3-aminopropopyl)sulfide;
N-methyl-bis(3-aminopropyl)amine;
hexamethylenediamine;
heptamethylenediamine;
nonamethylenediamine;
decamethylenediamine; and mixtures of such diamines.

Preferred amine-terminated organosiloxanes suitable for use in preparing polyetherimide siloxane copolymers are those in which n and m independently range from 1 to about 5 and g ranges from about 5 to about 25. Particularly preferred amine-terminated organosiloxanes are those in which n and m are each 3, and which have a molecular weight distribution such that g has an average value ranging from about 9 to about 20.

The two amine compounds, namely, the organic diamine and the amine-terminated organosiloxane,

may be physically mixed prior to reaction with the bis(ether anhydride)(s), thus forming a substantially random copolymer. Alternatively, block or alternating copolymers may be formed by forming prepolymers or sequential addition of reactants, as is well-known in the polymer art.

The amine-derived components of the polyetherimide siloxane copolymers generally contain from about 20 to 50 mole percent of the amine-terminated organosiloxane and from about 50 to 80 mole percent of the organic diamine. In preferred copolymers, the amine-derived components contain from about 25 to about 40 mole percent, most preferably about 35 mole percent of the amine-terminated organosiloxane.

The polyetherimide siloxane copolymer included in the blend compositions of the present invention may further contain repeating units of the formula

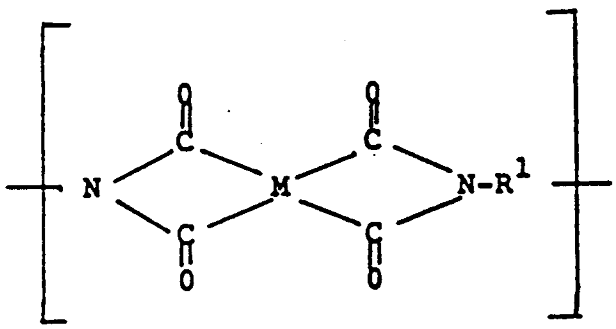

wherein $R^1$ is as previously defined and M is selected from the group consisting of

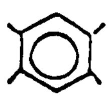 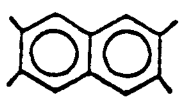 and 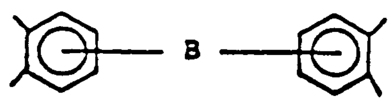

wherein B is -S- or

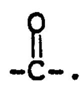

The blend compositions according to the present invention may be prepared using various blending techniques known in the art. For example, the mixture of polyphenylene ether resins may be preformed and then subsequently blended with the polyetherimide siloxane copolymer. Alternatively, the at least two polyphenylene ether resins may be simultaneously blended with one another and with the polyetherimide siloxane copolymer. In a preferred embodiment, the blended resins are melt extruded into a form suitable for further processing, for example, into pellets suitable for molding by means known in the art for solid thermoplastic compositions.

In a further embodiment of the present invention, the blend compositions may include one or more additional polymer components. For example, the blend compositions may further include an impact improving amount of a rubber component. Various synthetic and natural rubber materials known in the art may be included in the compositions. As will be demonstrated in the examples, particularly suitable rubber components for use in the present compositions include polyalkenylene polymers and block copolymers of a vinyl aromatic hydrocarbon and a post-hydrogenated alkene compound. Alternatively, the rubber component may comprise a rubber modified polystyrene resin, many of which are well known in the art and are often referred to as high-impact polystyrenes (HIPS). Polyalkenylene polymers formed from an alkenylene monomer having from about 5 to about 15 carbon atoms, for example, polyoctenylene rubber, are particularly suitable for use in the compositions of the present invention. Also preferred as the impact-modifying rubber compound for use in the compositions in the present invention is a block copolymer of a vinyl aromatic hydrocarbon and an alkene or a post-hydrogenated diene hydrocarbon. Generally, the block copolymers may be represented by the formula A-B-A wherein the terminal blocks A, which may be the same or different, are thermoplastic homopolymers or copolymers prepared from a vinyl aromatic compound. Examples of the vinyl aromatic compound include, but are not limited to, styrene, alpha-methylstyrene, vinyl toluene, vinyl xylene, ethylvinyl xylene, vinyl naphthalene and the like, or mixtures thereof. The center block B comprises an elastomeric polymer derived from alkene hydrocarbons such as ethylene and butylene, conjugated dienes and the like or mixtures thereof.

Preferably, the block copolymers are subjected to a hydrogenation process whereby the unsaturated rubber block portion B of the copolymer is hydrogenated. Hydrogenation may be accomplished using conventional hydrogenation catalysts and reaction conditions. In the hydrogenated block copolymers, the terminal blocks A may have an average molecular weight of from about 4,000 to about 115,000 while the center blocks B have an average molecular weight of from about 20,000 to about 450,000. Hydrogenated block copolymers are specifically described in the Jones U. S. Patent No. 3,431,323 and the DeLaMare et al U. S. Patent No. 3,670,054, both of which are incorporated herein by reference. Particularly preferred block copolymers for use in the present invention comprise hydrogenated styrene-butadiene-styrene (styrene-ethylene-butylene-styrene) block copolymers and hydrogenated styrene-isoprene-styrene block copolymers.

When the blend compositions of the present invention include a rubber component, it is preferred that the compositions comprise from about 50 to about 99 weight percent, and more preferably from 75 to about 98 weight percent, of the mixture of polyphenylene ether resins, from about 1 to about 50 weight percent, and more preferably from about 1 to about 24 weight percent, of the rubber component, and from about 0.1 to about 10 weight percent, and more preferably from about 0.5 to about 5 weight percent, of the copolyetherimide siloxane copolymer, based on the three components.

The blend compositions according to the present invention may also contain one or more conventional additives including, but not limited to, stabilizers, lubricants, antioxidants, colorants, fillers, plasticizers, antistatic agents, additional impact modifiers, and the like, in a manner well known in the art.

The blend compositions of the present invention are further illustrated by the following examples. Unless otherwise indicated, the parts and percentages employed in the examples are by weight.

## EXAMPLE 1

This example demonstrates the preparation of compositions according to the present invention. The compositions contained a mixture of polyphenylene ether resins (PPE), one of which had an intrinsic viscosity as measured in chloroform at 25°C of 0.40 dl/g and the other of which had an intrinsic viscosity in chloroform at 25°C of 0.28 dl/g. The compositions also contained a polyetherimide siloxane copolymer (P/S Copolymer) comprising a copolymer of polyetherimide and gamma-aminopropyl functionalized polydimethylsiloxane. The parts by weight of each of these components included in blend compositions 1A-1C according to the present invention are set forth in Table I. The blends were extruded on a 30 mm Werner-Pfleiderer twin-screw extruder at melt temperatures in the range of 626 to 645°F and using 20 inches Hg vacuum. The resulting extrudates were then injection molded on a four ounce Newbury injection molding machine using a melt temperature ranging from 614 to 630°F and a mold temperature of 190°F. A comparative composition 1D containing 100% of the polyphenylene ether resin having an intrinsic viscosity of 0.40 dl/g was similarly processed. Flammability tests of 1/8 inch (1/8 inch x 1/2 inch x 2.5 inch) and 1/16 inch (1/16 inch x 1/2 inch x 5 inch) samples of the blend compositions were performed in accordance with Underwriters Laboratory's Bulletin 94 Procedures (UL 94). The average flame-out time (FOT) and maximum FOT were measured together with the UL 94 rating which describes performance of the test specimens. The results of these flammability tests are also set forth in Table I. The capillary melt viscosity at 600°F, 1500 $sec^{-1}$ of the blend compositions was also measured, the results of which measurements are also set forth in Table I.

TABLE I

| COMPOSITION | 1A | 1B | 1C | 1D |
|---|---|---|---|---|
| PPE, pbw | | | | |
| 0.40 IV | 19 | 18 | 17 | 100 |
| 0.28 IV | 76 | 72 | 68 | --- |
| P/S Copolymer, pbw | 5 | 10 | 15 | --- |
| UL 94 Ratings | | | | |
| 1/8" specimen | | | | |
| FOT, sec | | | | |
| avg. | 0.9 | 0.8 | 1.0 | 7.0 |
| max. | 3 | 1 | 2 | 21 |
| Rating | V-O | V-O | V-O | V-1 |
| 1/16" specimen | | | | |
| FOT, sec | | | | |
| avg. | 0.9 | 0.7 | 1.5 | 7.3 |
| max. | 3 | 2 | 3 | 17 |
| Rating | V-O | V-O | V-O | V-1 |
| Melt Viscosity, poise 600°F, 1500 $sec^{-1}$ | 1860 | 1730 | 1640 | 3250 |

EXAMPLE 2

This example demonstrates the preparation of compositions according to the present invention containing a mixture of polyphenylene ether resins, a polyetherimide siloxane copolymer and an impact-modifying rubber component. The mixture of polyphenylene ether resins contained a first polyphenylene ether resin having an intrinsic viscosity of 0.40 dl/g and a second polyphenylene ether resin having an intrinsic viscosity of 0.26 dl/g. The polyetherimide siloxane copolymer was that described in Example 1. Compositions 2A-2C contained an impact-modifying rubber comprising polyoctenylene (Hüls Vestenamer® 8012). Compositions 2D-2F contained an impact-modifying rubber component comprising a styrene-ethylene-butylene-styrene block copolymer (Kraton® G1651 from Shell). Composition 2G included only the mixture of polyphenylene ether resins and was included for comparative purposes. The parts by weight of each of the components included in compositions 2A-2G are set forth in Table II. The blend compositions were extruded using a 30 mm Werner-Pfleiderer twin-screw extruder using melt temperatures in the range of 649 to 675 °F and 17 inches Hg vacuum. The compositions were then molded using a 4 ounce Newbury injection molding machine and employing melt temperatures in the range of 642 to 669 °F and a mold temperature of 190 °F. The compositions were subjected to flammability tests and capillary melt viscosity measurement at 600 °F, 3,000 $sec^{-1}$ in accordance with the procedures set forth in Example 1. Samples of the compositions were also subjected to measurement of notched Izod impact strength according to ASTM-D256 (employing a sample size of 1/8 inch x 1/2 inch x 2.5 inch), Dynatup (automated falling dart energy-to-fracture) strength according to ASTM-D3763 (using a 1/8 inch x 4 inch disc) and tensile yield strength and tensile elongation-at-break according to ASTM-D638. The results of these measurements are also set forth in Table II.

TABLE II

| Composition | 2A | 2B | 2C | 2D | 2E | 2F | 2G |
|---|---|---|---|---|---|---|---|
| PPE, pbw | | | | | | | |
| 0.40 IV | 45 | 46 | 47 | 45 | 46 | 47 | 50 |
| 0.26 IV | 45 | 46 | 47 | 45 | 46 | 47 | 50 |
| P/S Copolymer, pbw | 5 | 3 | 1 | 5 | 3 | 1 | -- |
| Rubber, pbw | | | | | | | |
| Polyoctenylene | 5 | 5 | 5 | - | - | - | -- |
| SEBS Block | - | - | - | 5 | 5 | 5 | -- |
| UL 94 Ratings | | | | | | | |
| 1/8" specimen | | | | | | | |
| FOT, sec | | | | | | | |
| avg. | 1.2 | 1.0 | 2.4 | 1.3 | 1.4 | 1.9 | 4.4 |
| max. | 3 | 1 | 8 | 2 | 5 | 6 | 9 |
| Rating | V-0 | V-0 | V-0 | V-0 | V-0 | V-0 | V-0 |
| 1/16" specimen | | | | | | | |
| FOT, sec | | | | | | | |
| avg. | 1.7 | 2.4 | 5.5 | 2.7 | 2.2 | 2.9 | 9.7 |
| max. | 3 | 12 | 13 | 5 | 5 | 6 | 40 |
| Rating | V-0 | V-1 | V-1 | V-0 | V-0 | V-0 | fails |
| Melt Viscosity, poise 600°F, 3000 $sec^{-1}$ | 1590 | 1640 | 1720 | 1520 | 1510 | 1400 | 1870 |
| Izod Impact, ft-lb/in | | | | | | | |
| Room temperature | 4.3 | 4.6 | 3.6 | 3.3 | 3.0 | 2.3 | 0.3 |
| -20°F | 1.9 | 1.7 | 0.9 | 1.5 | 2.4 | 1.5 | 0.4 |
| Dynatup, ft-lb | | | | | | | |
| Room temperature | 14 | 17 | 18 | 28 | 27 | 20 | 1 |
| -20°F | 2 | 5 | 2 | 4 | 4 | 3 | 2 |
| Tensile Properties | | | | | | | |
| Yield strength, psi | 9170 | 9110 | 9270 | 9770 | 9890 | 9930 | 10200 |
| Elongation, % | 28 | 27 | 27 | 19 | 19 | 19 | 10 |

The rubber component included in the blend compositions provided improved impact resistance to the blend compositions. Additionally, the results set forth in Table II surprisingly demonstrate that lower amounts of the polyetherimide siloxane copolymer could be employed in the compositions while retaining the advantageous flame retardant properties. The compositions of Example 2 also exhibited good processability as indicated by their melt viscosities.

EXAMPLE 3

In this example, compositions 3A-3F according to the present invention were prepared comprising a mixture of polyphenylene ether resins, a polyetherimide siloxane copolymer and a styrene-ethylene-butylene-styrene block copolymer as an impact modifier. Additionally, comparative compositions 3G-3I containing a single polyphenylene ether resin, a polyetherimide siloxane copolymer and the styrene-ethylene-butylene-styrene block copolymer were also prepared. The parts by weight of the components

included in compositions 3A-3I are set forth in Table III. The extrusion and molding procedures described in Example 2 were followed using an extrusion melt temperature in the range of 653 to 668 °F and 7 inches Hg vacuum, an injection molding melt temperature in the range of 652 to 662 °F and a mold temperature of 200 °F. Compositions 3A-3I were subjected to the flammability test and measurement of capillary melt viscosity in accordance with the procedures described in Example 1. The compositions were also subjected to measurement of Izod impact strength, Dynatup strength and tensile properties in accordance with the procedures described in Example 2. The results of these tests and measurements are also set forth in Table III.

TABLE III

| Composition | 3A | 3B | 3C | 3D | 3E | 3F | 3G | 3H | 3I |
|---|---|---|---|---|---|---|---|---|---|
| PPE, pbw | | | | | | | | | |
| 0.40 IV | 46.5 | 45.3 | 44 | 69.8 | 67.9 | 66 | 93 | 90.5 | 88 |
| 0.26 IV | 46.5 | 45.2 | 44 | 23.2 | 22.6 | 22 | — | -- | — |
| P/S Copolymer, pbw | 2 | 2 | 2 | 2 | 2 | 2 | 2 | 2 | 2 |
| SEBS Block, pbw | 5 | 7.5 | 10 | 5 | 7.5 | 10 | 5 | 7.5 | 10 |
| UL 94 Ratings | | | | | | | | | |
| 1/8" specimen | | | | | | | | | |
| FOT, sec | | | | | | | | | |
| avg. | 1.9 | 1.6 | 2.1 | 2.5 | 2.6 | 2.4 | 2.2 | 2.1 | 2.8 |
| max. | 5 | 3 | 7 | 7 | 7 | 6 | 5 | 3 | 7 |
| Rating | V-0 | V-0 | V-0 | V-0 | V-0 | V-0 | V-0 | V-0 | V-0 |
| 1/16" specimen | | | | | | | | | |
| FOT, sec | | | | | | | | | |
| avg. | 1.3 | 2.4 | 3.8 | 1.0 | 1.8 | 2.8 | 1.7 | 2.4 | 2.2 |
| max. | 2 | 8 | 9 | 2 | 4 | 5 | 4 | 4 | 4 |
| Rating | V-0 | V-0 | V-0 | V-0 | V-0 | V-0 | V-0 | V-0 | V-0 |
| Melt Viscosity, poise 600°F, 3000 $sec^{-1}$ | 1580 | 1540 | 1380 | 1620 | 1710 | 1600 | 2030 | 1950 | 1870 |
| Izod Impact, ft-lb/in | | | | | | | | | |
| Room temperature | 3.3 | 6.0 | 6.4 | 4.2 | 5.5 | 6.9 | 2.6 | 6.1 | 7.1 |
| -20°F | 1.6 | 2.8 | 3.2 | 2.1 | 2.7 | 3.8 | 1.5 | 2.0 | 3.6 |
| Dynatup, ft-lb | | | | | | | | | |
| Room temperature | 33 | 35 | 35 | 38 | 35 | 36 | 37 | 40 | 35 |
| -20°F | 3 | 10 | 3 | 19 | 11 | 24 | 16 | 26 | 31 |
| Tensile Properties | | | | | | | | | |
| Yield strength, psi | 9850 | 9200 | 8650 | 9940 | 9360 | 8930 | 10080 | 9570 | 9160 |
| Elongation, % | 28 | 35 | 25 | 27 | 35 | 26 | 36 | 44 | 31 |

The results set forth in Table III demonstrate that all of compositions 3A-3I exhibited good flame retardant properties using only small amounts of the polyetherimide siloxane copolymer. However, compositions 3A-3F according to the present invention also exhibited improved processability as indicated by lower melt viscosities as compared with comparative compositions 3G-3I. Additionally, the compositions according to the present invention exhibited a good combination of mechanical properties as indicated by the measured Izod impact strength, Dynatup strength and tensile properties.

The preceding examples are set forth to illustrate specific embodiments of the invention and are not

intended to limit the scope of the blend compositions of the present invention. Additional embodiments and advantages within the scope of the claimed invention will be apparent to one of ordinary skill in the art.

**Claims**

1. A blend composition, comprising
   (a) a mixture of at least two polyphenylene ether resins, the first polyphenylene ether resin having an intrinsic viscosity at 25 ° C in chloroform of not less than about 0.40 dl/g and the second polyphenylene ether resin having an intrinsic viscosity at 25 ° C in chloroform of not greater than about 0.30 dl/g; and
   (b) a polyetherimide siloxane copolymer.

2. A blend composition as defined by claim 1, wherein the mixture of polyphenylene ether resins includes the second polyphenylene ether resin having an intrinsic viscosity of not greater than 0.30 dl/g in an amount sufficient to lower the melt viscosity of the blend composition.

3. A blend composition as defined by claim 1, wherein the mixture of polyphenylene ether resins includes from about 5 to about 95 weight percent of the first polyphenylene ether resin having an intrinsic viscosity of not less than about 0.40 dl/g and from about 95 to about 5 weight percent of the second polyphenylene ether resin having an intrinsic viscosity of not greater than about 0.30 dl/g, based on the first and second polyphenylene ether resins.

4. A blend composition as defined by claim 1, wherein the polyetherimide siloxane copolymer is included in an amount sufficient to improve the flame retardant properties of the blend compositions.

5. A blend composition as defined by claim 1, wherein the blend composition comprises from about 50 to about 99 weight percent of the mixture of at least two polyphenylene ether resins and from about 1 to about 50 weight percent of the polyetherimide siloxane copolymer, based on the mixture of at least two polyphenylene ether resins and the polyetherimide siloxane copolymer.

6. A blend composition as defined by claim 5, wherein the blend composition comprises from about 75 to about 99 weight percent of the mixture of at least two polyphenylene ether resins and from about 1 to about 25 weight percent of the polyetherimide siloxane copolymer, based on the mixture of at least two polyphenylene ether resins and the polyetherimide siloxane copolymer.

7. A blend composition as defined by claim 6, wherein the blend composition comprises from about 95 to about 99 weight percent of the mixture of at least two polyphenylene ether resins and from about 1 to about 5 weight percent of the polyetherimide siloxane copolymer, based on the mixture of at least two polyphenylene ether resins and the polyetherimide siloxane copolymer.

8. A blend composition as defined by claim 1, wherein the first and second polyphenylene ether resins are individually selected from the group consisting of poly(2,6-dimethyl-1,4-phenylene) ether, poly-(2,3,6-trimethyl-1,4-phenylene) ether, a copolymer which includes units of 2,6-dimethyl-1,4-phenylene ether and units of 2,3,6-trimethyl-1,4-phenylene ether, and a blend of poly(2,6-dimethyl-1,4-phenylene)-ether and poly(2,3,6-trimethyl-1,4-phenylene) ether.

9. A blend composition as defined by claim 1, wherein the polyetherimide siloxane copolymer contains repeating units of the formula

(I)

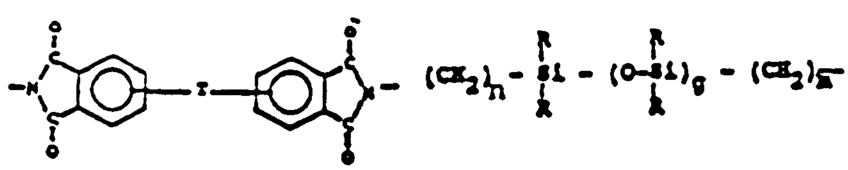

and of the formula

(II) 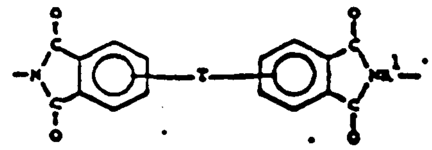

wherein T is -0- or a group of the formula -0-Z-0-wherein the divalent bonds of the -0- or the -0-Z-0- group are in the 3,3', 3,4', 4,3', or the 4,4' positions; Z is a divalent radical selected from the group consisting of

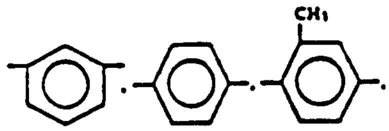

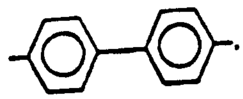

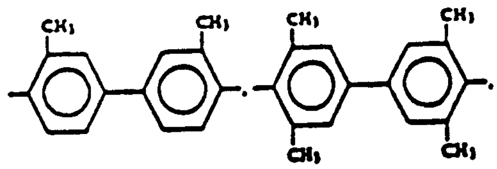

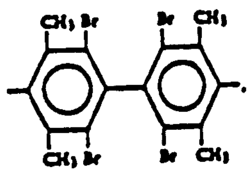

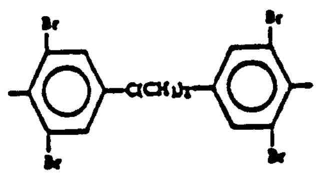

and

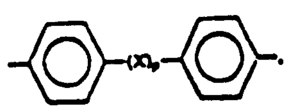

wherein X is a member selected from the group consisting of divalent radicals of the formulas

$$-C_yH_{2y}-,\quad -\overset{O}{\overset{\|}{C}}-,\quad -\overset{O}{\overset{\|}{\underset{\underset{O}{\|}}{S}}}-,\quad -O-\ \text{and}\ -S-$$

where y is an integer from 1 to about 5, and p is 0 or 1; n and m independently are integers from 1 to about 10; g is an integer from 1 to about 40; R is a $C_1$-$C_{14}$ monovalent hydrocarbon radical or a substituted $C_1$-$C_{14}$ monovalent hydrocarbon radical; and $R^1$ is a divalent organic radical selected from the group consisting of (a) aromatic hydrocarbon radicals having from 6 to about 20 carbon atoms and

halogenated derivatives thereof, (b) alkylene radicals having from 2 to about 20 carbon atoms, (c) cycloalkylene radicals having from 3 to about 20 carbon atoms, and (d) divalent radicals of the general formula

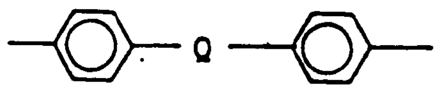

where Q is a member selected from the group consisting of

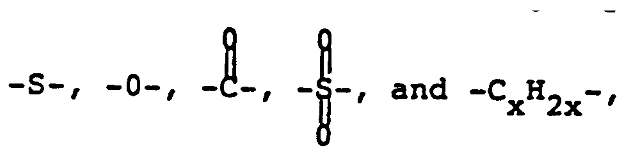

and x is an integer from 1 to about 5.

**10.** A blend composition as defined by claim 9, wherein in formula (I), R is a methyl group.

**11.** A blend composition as defined by claim 10, wherein n and m are each 3.

**12.** A blend composition as defined by claim 9, wherein the polyetherimide siloxane copolymer further contains repeating units of the formula

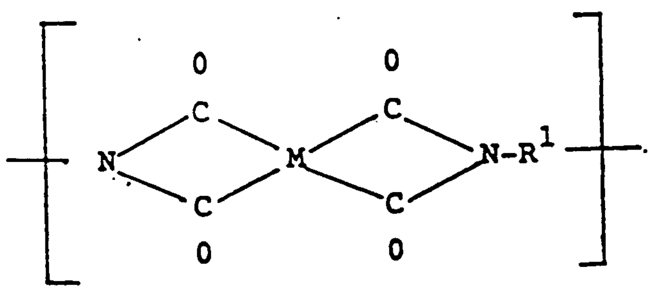

wherein $R^1$ is as previously defined and M is selected from the group consisting of

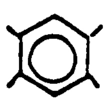 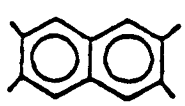 and 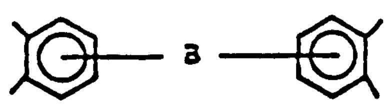

wherein B is -S- or

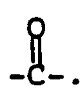

**13.** A blend composition as defined by claim 1, further comprising an impact improving amount of a rubber component (c).

**14.** A blend composition as defined by claim 13, wherein the rubber component is selected from the group consisting of (i) polyalkenylene polymers and (ii) block copolymers of a vinyl aromatic hydrocarbon and an alkene or post-hydrogenated diene compound.

**15.** A blend composition as defined by claim 14, wherein the rubber component (c) comprises a polyalkenylene polymer formed from an alkenylene monomer having from about 5 to about 15 carbon atoms.

**16.** A blend composition as defined by claim 15, wherein the rubber component (c) comprises polyoctenylene rubber.

**17.** A blend composition as defined by claim 14, wherein the rubber component (c) comprises a block copolymer.

**18.** A blend composition as defined by claim 17, wherein the block copolymer comprises a hydrogenated styrene-butadiene-styrene block copolymer.

**19.** A blend composition as defined by claim 13, comprising from about 50 to about 99 weight percent of the mixture of polyphenylene ether resins, from about 1 to about 50 weight percent of the rubber component, and from about 0.1 to about 10 weight percent of the copolyetherimide siloxane copolymer, based on said three components.

**20.** A blend composition as defined by claim 19, comprising from about 75 to about 98 weight percent of the mixture of polyphenylene ether resins, from about 1 to about 24 weight percent of the rubber component, and from about 0.5 to about 5 weight percent of the copolyetherimide siloxane copolymer, based on said three components.

**21.** A blend composition as defined by claim 1, further including at least one additive selected from the group consisting of stabilizers, lubricants, antioxidants, colorants, fillers, plasticizers and antistatic agents.

European Patent Office

# EUROPEAN SEARCH REPORT

Application Number

EP 91 12 0142

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 290 806 (GENERAL ELECTRIC COMPANY)<br>* claims 1-20 * | 1-12 | C 08 L 71/12 //<br>(C 08 L 71/12<br>C 08 L 79:08<br>C 08 L 83:06<br>C 08 L 23:00 ) |
| Y | EP-A-0 401 690 (GENERAL ELECTRIC COMPANY)<br>* claims 1-20 * | 1-12 | |
| A | EP-A-0 091 118 (GENERAL ELECTRIC COMPANY)<br>& US-A-4,431,779 (cat. D) * claims 1-9 * | 1-21 | |
| A | DE-A-3 518 277 (HÜLS AKTIENGESELLSCHAFT)<br>* claims 1-10 * | 1-21 | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 27-03-1992 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document